# EUROPEAN PATENT APPLICATION

(11) **EP 4 613 626 A1**
(43) Date of publication of application: **10.09.2025**
(21) Application number: 23901988.8
(22) Date of filing: 25.04.2023
(51) Int. Cl.: B63B 1/38

(54) **SHIP BOTTOM AIR INJECTION STABILIZATION ASSEMBLY, AND SHIP**

(30) Priority: 14.12.2022 CN 202211607956
(71) Applicant: CSSC Shanghai Marine Energy Saving Technology co., Ltd., Shanghai 200011 (CN)
(72) Inventor: ZHANG, Xiaosong, Shanghai 200011 (CN); ZHOU, Weixin, Shanghai 200011 (CN); GAO, Lijin, Shanghai 200011 (CN); HUANG, Guofu, Shanghai 200011 (CN); HONG, Fangwen, Shanghai 200011 (CN); CHEN, Leiqiang, Shanghai 200011 (CN)
(74) Representative: Pipoli, Massimo
(86) International application number: PCT/CN2023/090545
(87) International publication number: WO 2024/124775

(57) **Abstract**

Provided are a ship bottom air injection stabilization assembly and a ship. The ship bottom is provided with at least one row of air injection holes in a first direction. The ship bottom air injection stabilization assembly includes a flow guide and a protruding member. The flow guide is mounted on the ship bottom. The flow guide has a first end and a second end in a second direction. The first end is located upstream of the second end. The protruding member is mounted on the ship bottom, connected to the second end, and spaced apart from and located upstream of the at least one row of air injection holes. The peripheral surface of the protruding member facing the at least one row of air injection holes is an arc surface. The first direction is the width direction of the ship.

## Description

This application claims priority to Chinese Patent Application No. 202211607956.9 filed with the China National Intellectual Property Administration (CNIPA) on Dec. 14, 2022, the disclosure of which is incorporated herein by reference in its entirety.

### TECHNICAL FIELD

This application relates to the field of ship technology, particularly a ship bottom air injection stabilization assembly and a ship.

### BACKGROUND

With the increasing demand for improved energy efficiency in the shipping industry, innovative energy-saving technologies such as ship bottom air injection for drag reduction are increasingly being applied to large transport vessels. The principle of ship bottom air injection for drag reduction lies in arranging air injection pipes along the ship bottom to continuously inject air, thereby forming a layer of air between the ship bottom and the surrounding water. This partial separation of the ship bottom from the water reduces the contact area between the ship bottom and the water and thus reduces the drag exerted on the ship during the ship movement. The more stable the injected air is and the slower the air dissipates, the better the drag reduction effect is. To further stabilize the air and improve the drag reduction effect, an air cavity structure may be arranged on the ship bottom. In the related art, an air cavity structure is often provided with a flow guide upstream of air injection holes, creating a low-pressure area behind the flow guide. When the air is injected, the low-pressure effect causes the air to tend to accumulate toward this low-pressure area, thus slowing down the diffusion of air bubbles.

However, as the ship advances and the water flows backward, strong large-scale columnar vortexes rotating clockwise are prone to form in the low-pressure area behind the flow guide. When the intensity of the vortexes becomes excessively strong, the vortexes may shear the air, accelerating the breakup and diffusion of air bubbles, which negatively impacts the drag reduction of the ship.

### SUMMARY

This application provides a ship bottom air injection stabilization assembly and a ship to reduce the vortex size and intensity, decelerate the bubble diffusion, and enhance the effect of air injection for drag reduction.

In the ship bottom air injection stabilization assembly disposed on a ship bottom, the ship bottom is provided with at least one row of air injection holes in a first direction. The ship bottom air injection stabilization assembly includes a flow guide and a protruding member. The flow guide is mounted on the ship bottom. The flow guide has a first end and a second end in a second direction. The first end is located upstream of the second end. The protruding member is mounted on the ship bottom, connected to the second end, and spaced apart from and located upstream of the at least one row of air injection holes. The peripheral surface of the protruding member facing the at least one row of air injection holes is an arc surface. The first direction is the width direction of the ship.

Optionally, the height of the section gradually increases from the first end to the second end, and the height of the end of the arc surface connected to the second end is equal to the height of the second end.

Optionally, the dimension of the protruding member in the second direction is denoted as a, the height of the ship bottom air injection stabilization assembly is denoted as b, 0.5b ≤ a ≤ b, and the second direction is the length direction of the ship.

Optionally, the height of the ship bottom air injection stabilization assembly is denoted as b, the distance from the protruding member to a center of a row of air injection holes closest to the protruding member among the at least one row of air injection holes is denoted as c, and 3b ≤ c ≤ 5b.

Optionally, the dimension of the flow guide in the second direction is denoted as d, the length of the ship is denoted as e, 0.005e ≤ d ≤ 0.006e, and the second direction is the length direction of the ship.

Optionally, the wedge angle of the first end ranges from 5° to 8°.

Optionally, two side edges of the ship bottom air injection stabilization assembly in the first direction are inclined toward the central longitudinal section of the ship from the protruding member to the flow guide.

Optionally, the angle F between the second direction and each of the two side edges of the ship bottom air injection stabilization assembly in the first direction satisfies 15° ≤ F ≤ 20°, and the second direction is the length direction of the ship.

Optionally, the ship bottom air injection stabilization assembly is symmetrical about the central longitudinal section of the ship.

In the ship, the ship bottom of the ship is provided with at least one row of air injection holes in a first direction, the ship bottom is provided with the preceding ship bottom air injection stabilization assembly, and the ship bottom air injection stabilization assembly is located upstream of the at least one row of air injection holes.

### BRIEF DESCRIPTION OF DRAWINGS

FIG. 1 is diagram one illustrating the structure of a ship bottom air injection stabilization assembly mounted on a ship bottom according to an embodiment of this application.
FIG. 2 is diagram two illustrating the structure of a ship bottom air injection stabilization assembly mounted on a ship bottom according to an embodiment of this application.
FIG. 3 is diagram one illustrating the structure of a ship bottom air injection stabilization assembly according to an embodiment of this application.
FIG. 4 is diagram two illustrating the structure of a ship bottom air injection stabilization assembly according to an embodiment of this application.

### Reference list

100. ship bottom air injection stabilization assembly; 10. flow guide; 11. first end; 12. second end; 20. protruding member; 21. arc surface; 200. ship bottom; 210. air injection hole; 300. central longitudinal section

### DETAILED DESCRIPTION

This application is described hereinafter in conjunction with drawings and embodiments. It is to be understood that the embodiments set forth below are intended to illustrate but not to limit this application.

In the description of this application, the terms "joined", "connected", and "fixed" are to be understood in a broad sense unless otherwise expressly specified and limited. For example, the term "connected" may refer to "fixedly connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, meanings of the preceding terms in this application may be understood based on situations.

In this application, unless otherwise expressly specified and limited, when a first feature is described as being "on" or "below" a second feature, the first feature and the second feature may be in direct contact or be in contact via another feature between the two features instead of being in direct contact. Moreover, when the first feature is described as being "on", "above", or "over" the second feature, the first feature is right on, above, or over the second feature, the first feature is obliquely on, above, or over the second feature, or the first feature is simply at a higher level than the second feature. When the first feature is described as being "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "upper", "lower", "left", and "right" are based on the drawings. These orientations or position relations are intended only to facilitate description and simplify operation and not to indicate or imply that a device or element referred to must have such particular orientations or must be configured or operated in such particular orientations. Thus, these orientations or position relations are not to be construed as limiting this application. Additionally, terms "first" and "second" are used for distinguishing between descriptions and have no special meanings.

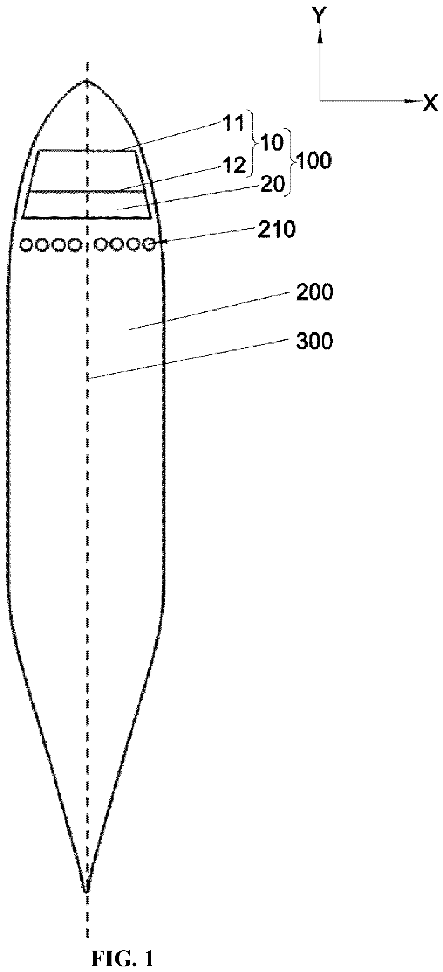

As shown in FIG. 1, the ship bottom 200 is provided with at least one row of air injection holes 210 in a first direction (direction X in FIG. 1, that is, the width direction of the ship). The air injection holes 210 inject air outward to form an air layer between the ship bottom 200 and the water, thereby reducing the drag on the ship during forward movement. The slower the injected air dissipates, the better the drag reduction effect. To further stabilize the air and improve the drag reduction effect, an air cavity structure may be arranged on the ship bottom 200. In the related art, an air cavity structure is often provided with a flow guide upstream of the air injection holes 210, creating a low-pressure area behind the flow guide and below the ship bottom. When the air bubbles are injected, the low-pressure effect causes the air bubbles to tend to accumulate toward this low-pressure area, thus slowing down the diffusion of the air bubbles.

However, as the ship advances and the water flows backward, strong large-scale columnar vortexes rotating clockwise are prone to form in the low-pressure area behind the flow guide. When the size and intensity of the vortexes become excessively large, the vortexes may shear the air, accelerating the breakup and diffusion of air bubbles, which negatively impacts the drag reduction of the ship.

This application provides a ship bottom air injection stabilization assembly 100 to reduce the vortex size and intensity, decelerate the air diffusion, and enhance the effect of air injection for drag reduction. As shown in FIG. 1 to FIG. 3, the ship bottom air injection stabilization assembly 100 includes a flow guide 10 and a protruding member 20. The flow guide 10 is mounted on the ship bottom 200. The flow guide 10 has a first end 11 and a second end 12 in a second direction (direction Y in the figure, that is, the length direction of the ship). The first end 11 is located upstream of the second end 12. The protruding member 20 is mounted on the ship bottom 200, connected to the second end 12, spaced apart from the at least one row of air injection holes 210, and located upstream of the at least one row of air injection holes 210. The peripheral surface of the protruding member 20 facing the at least one row of air injection holes 210 is an arc surface 21.

The protruding member 20 is disposed downstream of the flow guide 10. The arc surface 21 of the protruding member 20 faces the air injection holes 210. This is equivalent to that a suppression structure on the path where strong vortexes occur is added to a low-pressure area where strong vortexes are likely to form behind the flow guide 10. The protruding member 20 also occupies the space where vortexes would normally form. That is, the vortexes that would typically gather and intensify at the second end 12 are now filled by the protruding member 20. The arc surface 21 of the protruding member 20 ensures the formation of the low-pressure area, prevents the dispersion of accumulated bubbles, and prevents the vortexes from gradually intensifying along the plane. This acts to smooth and weaken the vortexes, reduce the size and strength of the vortexes, diminish the shear effect of the vortexes on the bubbles, prevent the bubbles from dissipating rapidly due to vortex shear, and enhance the effect of air injection for drag reduction.

Optionally, the height of the section gradually increases from the first end 11 to the second end 12, and the height of the end of the arc surface 21 connected to the second end 12 is equal to the height of the second end 12. With this arrangement, the drag of the flow guide 10 on the water is smaller. It is to be understood that the flow guide 10 is a wedge-shaped structure, with the first end 11 being a pointed end and the second end 12 being a larger-sized end, thereby reducing the drag of the flow guide 10 on the water. In other embodiments, the flow guiding surface of the flow guide 10 may also be curved. This is not limited herein.

Optionally, the connection between the arc surface 21 and the second end 12 is smoothly shaped, thereby minimizing edge structures on the outer surface of the ship bottom air injection stabilization assembly 100 and reducing the drag of the ship bottom air injection stabilization assembly 100 on the water.

As shown in FIG. 1, generally the air injection holes 210 in one row are symmetrical about the central longitudinal section 300 of the ship. To ensure the coverage range of the ship bottom air injection stabilization assembly 100 upstream of the air injection holes 210, the ship bottom air injection stabilization assembly 100 is symmetrical about the central longitudinal section 300 of the ship.

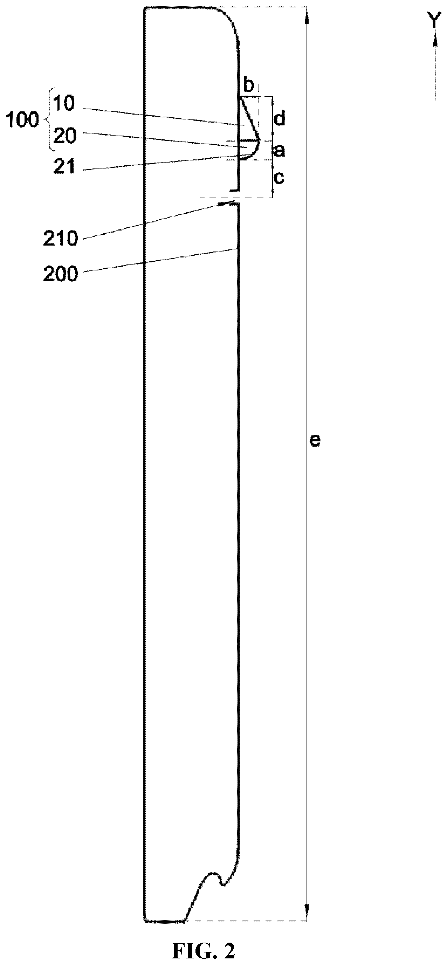

Optionally, as shown in FIG. 2, the dimension of the protruding member 20 in the second direction is denoted as a, the height of the ship bottom air injection stabilization assembly 100 is denoted as b, and 0.5b ≤ a ≤ b. In consideration that an excessively small value of a would cause the effect on smoothing the vortexes to be insignificant and that an excessively large value of a would affect the formation of the low-pressure area, the optional value range of a satisfies 0.5b ≤ a ≤ b.

Optionally, as shown in FIG. 2, the distance from the protruding member 20 to the center of the closest row of air injection holes 210 is c, and 3b ≤ c ≤ 5b. In consideration that an excessively large value of c would cause the low-pressure area formed by the ship bottom air injection stabilization assembly 100 and its vortex-suppressing effect to fail and that an excessively small value of c would cause the low-pressure area to be compressed so that the bubble accumulation effect is insignificant, the optional value range of c satisfies 3b ≤ c ≤ 5b.

Optionally, the dimension of the flow guide 10 in direction Y is denoted as d, the length of the ship is denoted as e, and 0.005e ≤ d ≤ 0.006e. The flow guide 10 should not be too large; otherwise, excessive drag occurs. Therefore, the optional value range of d satisfies 0.005e ≤ d ≤ 0.006e.

Optionally, the wedge angle of the first end 11 ranges from 5° to 8°. In consideration that the wedge angle should not be too large, the flow guide 10 is long and flat to minimize the drag on the flow guide 10 as much as possible.

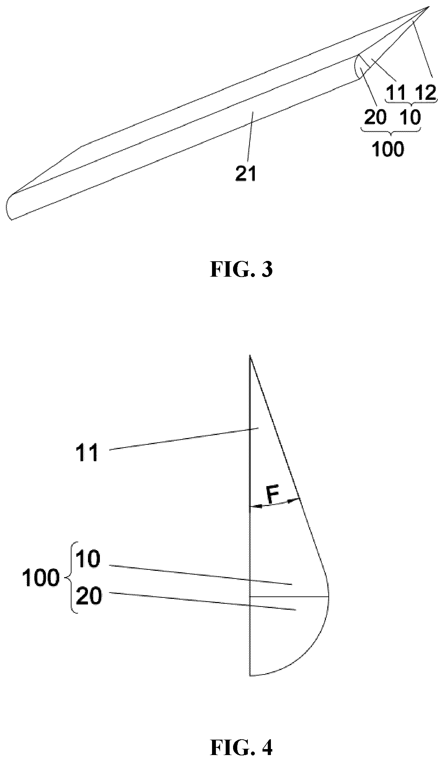

Optionally, two side edges of the ship bottom air injection stabilization assembly 100 in direction X are inclined toward the central longitudinal section 300 of the ship from the protruding member 20 to the flow guide 10. With this arrangement, as the ship moves in direction Y, the two sides of the ship bottom air injection stabilization assembly 100 also serve a flow guiding function, thereby reducing drag. As shown in FIG. 4, the angle F between direction Y and each of the two side edges of the ship bottom air injection stabilization assembly 100 in direction X satisfies 15° ≤ F ≤ 20°. This angle configuration is designed based on the angle of the bow. This is not described in detail here.

An embodiment provides a ship. With the preceding ship bottom air injection stabilization assembly 100, it is possible to reduce the size of vortexes at the ship bottom 200, weaken the intensity of the vortexes, improve the stability of the air on the surface of the ship bottom 200, and enhance the effect of air injection for drag reduction of the ship.

## Claims

1. A ship bottom air injection stabilization assembly, disposed on a ship bottom (200) provided with at least one row of air injection holes (210) in a first direction, and the ship bottom air injection stabilization assembly comprising:
a flow guide (10) mounted on the ship bottom (200) and having a first end (11) and a second end (12) in a second direction, wherein the first end (11) is located upstream of the second end (12); and
a protruding member (20) mounted on the ship bottom (200), connected to the second end (12), spaced apart from the at least one row of air ejection holes (210), and located upstream of the at least one row of air injection holes (210), wherein a peripheral surface of the protruding member (20) facing the at least one row of air injection holes (210) is an arc surface (21), and the first direction is a width direction of a ship.

2. The ship bottom air injection stabilization assembly of claim 1, wherein a height of a section gradually increases from the first end (11) to the second end (12), and a height of an end of the arc surface (21) connected to the second end (12) is equal to a height of the second end (12).

3. The ship bottom air injection stabilization assembly of claim 1, wherein a dimension of the protruding member (20) in the second direction is denoted as a, a height of the ship bottom air injection stabilization assembly is denoted as b, and 0.5b ≤ a ≤ b; and
wherein the second direction is a length direction of the ship.

4. The ship bottom air injection stabilization assembly of claim 1, wherein a height of the ship bottom air injection stabilization assembly is denoted as b, a distance from the protruding member (20) to a center of a row of air injection holes (210) closest to the protruding member (20) among the at least one row of air injection holes (210) is denoted as c, and 3b ≤ c ≤ 5b.

5. The ship bottom air injection stabilization assembly of claim 1, wherein a dimension of the flow guide (10) in the second direction is denoted as d, a length of the ship is denoted as e, and 0.005e ≤ d ≤ 0.006e; and
wherein the second direction is a length direction of the ship.

6. The ship bottom air injection stabilization assembly of any one of claims 1 to 5, wherein a wedge angle of the first end (11) ranges from 5° to 8°.

7. The ship bottom air injection stabilization assembly of any one of claims 1 to 5, wherein two side edges of the ship bottom air injection stabilization assembly in the first direction are inclined toward a central longitudinal section (300) of the ship from the protruding member (20) to the flow guide (10).

8. The ship bottom air injection stabilization assembly of claim 7, wherein an angle F between the second direction and each of the two side edges of the ship bottom air injection stabilization assembly in the first direction satisfies 15° ≤ F ≤ 20°; and
wherein the second direction is a length direction of the ship.

9. The ship bottom air injection stabilization assembly of any one of claims 1 to 5, wherein the ship bottom air injection stabilization assembly is symmetrical about a central longitudinal section (300) of the ship.

10. A ship, wherein a ship bottom (200) of the ship is provided with at least one row of air injection holes (210) in a first direction, the ship bottom (200) is provided with the ship bottom air injection stabilization assembly of any one of claims 1 to 9, and the ship bottom air injection stabilization assembly is located upstream of the at least one row of air injection holes (210).
